# EUROPÄISCHE PATENTSCHRIFT

(11) **EP 2 515 627 B1**
(45) Veröffentlichungstag und Bekanntmachung des Hinweises auf die Patenterteilung: **18.06.2014**
(21) Anmeldenummer: 10800925.9
(22) Anmeldetag: 21.12.2010
(51) Int. Cl.: A01F 15/00, B30B 9/30

(54) **BALLENPRESSE**
BALER
PRESSE A BALLES

(30) Priorität: 22.12.2009 DE 102009055217
(43) Veröffentlichungstag der Anmeldung: 31.10.2012
(73) Patentinhaber: Technische Universität Dresden, 01069 Dresden (DE); Raussendorf Maschinen- und Gerätebau GmbH, 02692 Obergurig (DE)
(72) Erfinder: WEIDIG, Klaus, 02692 Singwitz (DE); VOIGT, Jürgen, 01848 Hohnstein (DE); PORSCHE, Andreas, 01169 Dresden (DE); FEHRMANN, Jens, 01156 Dresden (DE); BERNHARDT, Gerd, 01728 Hänichen (DE); LÜTTICH, Hans-Robert, 01809 Dohna (DE)
(74) Vertreter: Sperling, Thomas
(86) Internationale Anmeldenummer: PCT/EP2010/070348
(87) Internationale Veröffentlichungsnummer: WO 2011/076776

(56) Entgegenhaltungen:
- EP-A2- 1 133 914
- DE-A1- 4 312 991
- DE-C- 119 916

## Beschreibung

Die Erfindung betrifft eine Ballenpresse zur kontinuierlichen Hochdruck-Verdichtung von zu verpressendem Gut und ein Verfahren zur Herstellung von quaderförmigen Ballen.

Gattungsgemäße Ballenpressen werden eingesetzt, um die Dichte des zu verpressenden Gutes möglichst stark zu erhöhen. Einsatzgebiete liegen insbesondere bei der Verarbeitung von landwirtschaftlichem Erntegut oder Wertstoffen der verarbeitenden Recyclingindustrie.

Eine hohe Verdichtung von Wertstoffen der verarbeitenden Recyclingindustrie oder von landwirtschaftlichem Erntegut, wie Stroh oder Heu, ist Voraussetzung für effiziente Transport- und Lagerprozesse.

Neben diesem Aspekt besteht bei der Einlagerung von Heu und Stroh in der landwirtschaftlichen Produktion seit längerem die Tendenz zur Silagebereitung mit der Forderung nach hoher Verdichtung des Halmgutes. Auch mit der Nutzung nachwachsender Rohstoffe zur Energiegewinnung entstehen zusätzliche Kriterien für die Logistik, bei der die Berücksichtigung von Transportwegen, Transportvolumen sowie Be- und Entladezeiten im technologischen Ablauf von entscheidender Bedeutung sind.

Im Stand der Technik sind verschiedene Verfahren und Vorrichtungen für die Verarbeitung von zu verpressendem Gut aus der Abfallwirtschaft und aus der Landwirtschaft bekannt.

So wird im Strohpressenbau beispielsweise überwiegend das diskontinuierlich wirkende Kolbenverdichtungsprinzip angewendet, das entweder mit einem Schwingkolben oder einem geradlinig pressenden Schubkolben umgesetzt wird. Bei den sogenannten Quaderballenpressen erfolgt die Verdichtung des Halmgutes mittels eines Presskolbens in einem Presskanal, nachdem das aufgenommene Material in einem Vorkanal vorverdichtet wurde.
Das technische Prinzip basiert auf der Umwandlung einer schnellen Drehbewegung, beispielsweise einer Traktorenzapfwelle, in eine oszillierende Schwing- oder Schubbewegung. Anfangs wurde die Bewegungsenergie durch einfache Riemen oder offene Zahnradübersetzungen in Verbindung mit Schwinghebelkonstruktionen umgesetzt, die mit den Forderungen nach Steigerung der Leistung und Erhöhung der Pressdichte durch robuste, leistungsstärkere Kegelstirnradgetriebe ersetzt wurden. Auftretende Belastungsspitzen wurden durch die Energiespeicherung mittels eines Schwungrades kompensiert.
Mit größeren Pressdichten wurden stabilere Presskolben und höhere Schubkolbengewichte notwendig, die wiederum bei oszillierender Bewegung zu höheren dynamischen Belastungen, insbesondere auf die Antriebselemente und die Maschinengestelle, führten. Die Kolbenfrequenz konnte aufgrund der bewegten Massen im Pressensystem nicht beliebig erhöht werden, sodass sich verschiedene Entwicklungen auf die Optimierung tangierender Systemelemente konzentrierten, wie zum Beispiel die Vorverdichtung im Förderkanal. Die entstehenden Ballen mit größeren Pressdichten werden mit der Doppelknotentechnik gesichert.
Beim Prinzip der Kolbenpressen ist die Energieeffizienz durch die der Pressenfunktion anhaftenden Reibungsverluste im Presskanal und am Kolben belastet. Das Kolbenverdichtungsprinzip verlangt als Gegendruck eine Haft- und eine Gleitreibung im Presskanal, um das Gut gegen die stehende Wand verdichten zu können. Hinzu treten Verluste durch das Rückexpandieren des Gutes im Presskanal zwischen den Kolbenhüben. Die technische Weiterentwicklung zur Steigerung der Effizienz wurde auf die Minimierung der Gleit- und Haftreibung gerichtet.
Mit jeder Weiterentwicklung der herkömmlichen Funktionsprinzipien erhöhte sich jedoch auch die Sensibilität und Anfälligkeit der komplizierter gewordenen Maschinenelemente und Baugruppensysteme, sodass die auf dem diskontinuierlichen Pressverfahren basierende technische Maschinenstruktur an ihren Leistungsgrenzen angelangt ist. Weitere Leistungssteigerungen würden zu Maschinenkonstruktionen führen, die unverhältnismäßig großen Material- und Energieaufwand erforderlich machen und störanfälliger wären, sodass auf Kolbenpressen basierende Verfahren die technologischen Anforderungen in Zukunft nicht mehr umfassend erfüllen werden.

Einige der aufgeführten Nachteile werden teilweise durch ein aus der DE 43 12 991 A1 bekanntes Verfahren sowie eine Vorrichtung zur Bildung quaderförmiger Pressballen aus landwirtschaftlichem Erntegut, insbesondere Halm- und/oder Blattgut, behoben. Dabei wird das Erntegut dem Eingangsbereich eines Presskanals mit rechtwinkligem Querschnitt zugeführt und durch diesen als Pressstrang hindurchgefördert. Während des Durchlaufens des Presskanals wird das Erntegut in vertikaler Richtung zusammengedrückt und mit einem, abhängig von der in der Pressstrecke zurückgelegten Weglänge, ansteigenden Verdichtungsgrad verdichtet. Der Abstand zwischen oberer und unterer Kanalbegrenzung verringert sich in Strangförderrichtung. Nach Durchgang durch den Presskanal werden Abschnitte des verdichteten Erntegutes abgeteilt und zur Aufrechterhaltung der Erntegutpressung mit Sicherungsmitteln umgeben. Die Pressdichten sind auf Werte im Bereich bekannter Großballen- beziehungsweise Hochdruckpressen von beispielsweise etwa 120 kg/m³ bis 150 kg/m³ für Stroh begrenzt.

Den im Stand der Technik bekannten Systemen ist zu eigen, dass die maximalen Pressdichten mit herkömmlichen Konstruktionen auf genannte Werte beschränkt sind. Eine Steigerung der Leistung und damit der Pressdichte ist nur mit unverhältnismäßig großem Aufwand an Material sowie Energie und damit Kosten möglich.

Aufgabe der vorliegenden Erfindung ist es, eine Vorrichtung und ein Verfahren zur kontinuierlichen Verdichtung von zu verpressendem Gut, insbesondere von landwirtschaftlichem Erntegut oder Wertstoffen der verarbeitenden Recyclingindustrie, zur Verfügung zu stellen, die zur kosten- und energieeffizienten Herstellung von hochdruckverdichteten quaderförmigen Ballen mit hohen Pressdichten geeignet sind.

Die Aufgabe wird durch eine erfindungsgemäße Ballenpresse zur kontinuierlichen Hochdruck-Verdichtung von zu verpressendem Gut zu quaderförmigen Ballen gelöst. Die Ballenpresse weist in der Reihenfolge des Transportes des Gutes einen Gutaufnehmer, eine Transporteinrichtung, eine Vorverdichtungskammer, einen Presskanal sowie Mittel zum Abtrennen der Ballen vom Pressstrang und zum Sichern des verdichteten Pressgutes auf. Das vom Gutaufnehmer empfangene zu verpressende Gut wird mittels einer Transporteinrichtung in die Vorverdichtungskammer gefördert, die in Transportrichtung zwischen dem Gutaufnehmer und dem Presskanal angeordnet ist. Die Vorverdichtungskammer ist an ihrer Einlassebene mit einer Transportwalze versehen, die das zu verpressende Gut in die Vorverdichtungskammer transportiert und dort zusammenpresst. Die Vorverdichtungskammer ist dabei zum Presskanal hin offen ausgebildet und weist vertikal angeordnete Seitenwände sowie eine Vorderwand auf. Die Vorverdichtungskammer und der Presskanal weisen jeweils eine Einlassebene und eine Auslassebene auf, wobei die Auslassebene der Vorverdichtungskammer der Einlassebene des Presskanals entspricht.
Der Presskanal ist ebenfalls aus vertikalen Seitenwänden ausgebildet und umfasst des Weiteren eine obere und eine untere in Transportrichtung des zu verpressenden Gutes zueinander geneigte horizontale Begrenzungen. Die horizontalen Begrenzungen des Presskanals sind aus Mitteln zum Transport und zum Verdichten des Pressgutes gestaltet, die wiederum aus mehreren Zinkenwalzen bestehen, die quer zur Transportrichtung angeordnet sind.
Die horizontalen Begrenzungsseiten des Presskanals sind derart geneigt zueinander angeordnet, dass sich der Abstand der Mittel zum Transport und zum Verdichten des Pressgutes, das heißt der Abstand der gegenüberliegenden Zinkenwalzen, in Transportrichtung des Pressgutes kontinuierlich verringert, wodurch die Verdichtung des geförderten Gutes steigt.

Die Zinkenwalzen sind als langsam drehende Rotoren ausgebildet, die mit durchsatzabhängiger Drehzahl rotieren, wobei die Ankopplung der Drehzahl der Rotoren an den Durchsatz eine vorteilhafte Ausgestaltung der Erfindung darstellt.
Die Zinkenwalzen werden auch als Zinkenrotoren oder Zinkentrommeln bezeichnet. Die Drehrichtungen der Zinkenwalzen einer Begrenzungsseite des Presskanals sind gleich. Die Zinkenwalzen gegenüberliegender Begrenzungsseiten des Presskanals rotieren in entgegengesetzter Richtung. Die Drehrichtungen sind gegensinnig. Die Länge der Zinkenwalzen entspricht dem Abstand der vertikalen Seitenwände, sodass sich die Zinkenwalzen über die gesamte Breite der horizontalen Begrenzung des Presskanals erstrecken. Die Zinkenwalzen sind besonders vorteilhaft aus einer Vielzahl dreizinkiger, in ihrem Mittelpunkt auf einer gemeinsamen Welle parallel zueinander beabstandet und V-förmig versetzt angeordneter Zinkenscheiben ausgebildet. Aufgrund ihrer Form werden die Zinkenscheiben auch als Zinkensterne bezeichnet. Die Zinken benachbart angeordneter Zinkenwalzen einer Begrenzungsseite greifen ineinander.
Eine Vielzahl von mit drei Zinken versehenen Zinkenscheiben ist demzufolge gleichmäßig beabstandet zueinander gemeinsam auf einer Welle angeordnet und bilden eine Zinkenwalze. Mehrere derart ausgestaltete Zinkenwalzen sind in horizontaler Richtung und in Transportrichtung des Pressgutes hintereinander angeordnet und bilden somit eine horizontale Begrenzungsseite des Presskanals.
Die drei Zinken der Zinkenscheiben sind vorteilhaft stumpfwinklig zueinander angeordnet und gleichmäßig auf dem Umfang der Zinkenscheiben verteilt. Die Spitze der Zinken sind in einem Winkel von kleiner oder gleich 60° ausgebildet. Vorzugsweise sind die Spitzen in einem Winkel von 25° bis 45°, insbesondere mit 36° ausgebildet.

Die Flanken der Zinken sind besonders vorteilhaft doppel-S-förmig geschwungen ausgebildet. Die Geometrie und Anordnung der Zinken bewirken im Zusammenspiel, dass das zu verpressende Gut, insbesondere halmförmiges Erntegut, über benachbart angeordnete Zinken gut transportierbar ist, ohne sich dabei um die Zinken zu wickeln. Das zu verpressende Gut wird zusammengepresst und zerknickt. Insbesondere halmförmige Biomasse als Pressgut, wie Stroh, wird zudem vorteilhaft ineinander verfilzt und verhakt. Das Verhaken der Halme bewirkt einen zusätzlichen Zusammenhalt des Gutes nach dem Verdichten.

Nach einer bevorzugten Ausgestaltung der Erfindung sind die vertikalen Seitenwände des Presskanals parallel zueinander ausgerichtet. In Verbindung mit dem sich in Transportrichtung kontinuierlich verringernden Abstand der als Mittel zum Transport des Pressgutes ausgebildeten Begrenzungsseiten des Presskanals, verringert sich die rechteckige Querschnittsfläche des Presskanals ebenfalls kontinuierlich.

Nach einer alternativen Ausgestaltung der Erfindung sind die vertikalen Seitenwände des Presskanals derart zueinander geneigt ausgerichtet, dass sich der Abstand zwischen den Seitenwänden als vertikale Begrenzungsseiten des Presskanals in Transportrichtung des zu verpressenden Gutes und damit der Querschnitt des Presskanals zusätzlich kontinuierlich verringert.

Eine Weiterbildung der Erfindung besteht darin, dass auch die vertikalen Seitenwände der Vorverdichtungskammer derart zueinander geneigt ausgerichtet sind, dass sich der Abstand zwischen den Seitenwänden in Transportrichtung des zu verpressenden Gutes kontinuierlich verringert. Die Transportrichtung des Pressgutes in der Vorverdichtungskammer muss dabei nicht der Transportrichtung des Pressgutes im Presskanal entsprechen.

Der Erfindungsgedanke wird auch dadurch weitergeführt, wenn die Seitenwände der Vorverdichtungskammer und/oder des Presskanals gleichfalls durch aneinandergereihte Walzen und insbesondere Zinkenwalzen gebildet werden. Die seitlichen Begrenzungen können sowohl als aktive als auch als passive Förderelemente ausgestaltet werden. Dadurch lässt sich nochmals der Energieverlust durch Gleitreibung des Pressgutes an den Seitenwänden verringern. Eine weitere Steigerung der Verdichtung ist erreichbar, wenn die seitlichen Begrenzungen in Transport- und Verdichtungsrichtung zueinander geneigt beziehungsweise konisch ausgebildet sind.

Das erfindungsgemäße Verfahren zur kontinuierlichen Hochdruck-Verdichtung von zu verpressendem Gut, insbesondere von landwirtschaftlichem Erntegut oder Wertstoffen der verarbeitenden Recyclingindustrie, zu quaderförmigen Ballen, mittels der Ballenpresse ist durch folgende Schritte charakterisiert:
- Aufnehmen des Gutes mittels eines Gutaufnehmers und Transport zur Vorverdichtungskammer,
- Vorverdichten des Gutes innerhalb der Vorverdichtungskammer,
- Hauptverdichten des vorverdichteten Gutes mittels sich langsam drehender Zinkenwalzen im Presskanal, dessen rechteckiger Querschnitt sich in Transportrichtung kontinuierlich verringert, sodass das Gut beim gleichmäßigen Durchlaufen des Presskanals abhängig von der im Presskanal zurückgelegten Strecke einen zunehmenden Verdichtungsgrad aufweist, wobei der maximale Verdichtungsgrad in der Auslassebene des Presskanals erreicht wird, und
- Konfektionieren des Pressstranges zu Ballen.
Die Hauptverdichtung des Gutes im Presskanal erfolgt somit mittels sich langsam drehender Zinkenwalzen, wobei sich die Querschnittsfläche des Presskanals in Transportrichtung kontinuierlich verringert und durch temporäres Eingreifen der Zinken der Zinkenwalzen in den Pressstrang durch die drehende Bewegung der Zinkenwalzen.

Während des Hauptverdichtens des vorverdichteten Pressgutes greifen die Zinken der Zinkenwalzen derart in das Gut ein, dass das an den Zinken anliegende Gut, insbesondere landwirtschaftliches Erntegut in Form von Halmen, untereinander verhakt, verwirkt und verfilzt wird.
Zum Konfektionieren des verdichteten Pressstranges werden Ballen abgetrennt, die mit Sicherungsmitteln in ihrer Form fixiert gesichert werden.

Nach der Konzeption der Erfindung werden die Kräfte für den Transport des Gutes durch den Presskanal über die gesamte Breite der horizontalen Begrenzungsseiten des Presskanals und in Transportrichtung gleichmäßig mittels der durch die Zinkenwalzen gebildeten Begrenzungsflächen auf das zu verpressende Gut übertragen. Von besonderem Vorteil ist, dass das zu verpressendes Gut bereits in der Vorverdichtungskammer auf eine Dichte von 80 kg/m³ bis 120 kg/m³ und anschließend im Presskanal auf eine Dichte von 160 kg/m³ bis 240 kg/m³ verdichtet wird.
Dabei wird das zu verpressende Gut beim Transport durch den Presskanal bevorzugt mit einem gleichmäßigen Verdichtungsgrad und einem Verdichtungsverhältnis von bis zu 3:1 verdichtet.

Zusammengefasst besteht die Grundkonzeption der Erfindung darin, dass die Verdichtung des Gutes in mehreren Phase und mit unterschiedlichen Mitteln erfolgt.
Zunächst sind die Phasen der Vorverdichtung in der Vorverdichtungskammer und die Hauptverdichtung im Presskanal zu nennen.
Innerhalb des Presskanals erfolgt die Verdichtung über die Komponente des Zusammenlaufens der horizontalen Begrenzungsflächen des Presskanals durch die Mittel zum Transport und zum Verdichten des Pressgutes. Bevorzugt laufen die horizontalen Begrenzungsflächen des Presskanals kontinuierlich in der Art einer geneigten Ebene zusammen. Je nach Pressgut ist es jedoch alternativ im Sinne der Erfindung, wenn die horizontalen Begrenzungsflächen positiv oder negativ in Transportrichtung gekrümmt ausgebildet sind. Damit sind Besonderheiten des Pressgutes im Hinblick auf deren Verdichtungscharakteristik nutzbar.
Eine weitere Komponente der Verdichtung besteht darin, dass die Zinken der Zinkenwalzen während der Umdrehungen der Walzen in das Pressgut temporär eindringen und es lokal nach dem Wirkprinzip von Schaffußwalzen zu einer hohen Verdichtung kommt. Ein vorteilhafter Nebeneffekt des temporären Eindringens der Zinken in das Pressgut in Verbindung mit der Bewegung des Pressgutes besteht darin, dass es dadurch an der Oberfläche des Pressstranges zu einer Art Verfilzung und Verhakelung von halmartigem Pressgut kommt, was sich stabilisierend für den Pressstrang und die entstehenden Ballen auswirkt.
Als zusätzliche Komponente der Verdichtung wirkt die spiralförmige Anordnung der Zinken auf der Walze, die zu einer Momentenvergleichmäßigung führt und zur Hauptverdichtung eingesetzt wird.

Die erfindungsgemäße Lösung weist diverse Vorteile auf. Mittels der konzeptionsgemäßen Ballenpresse und dem Verfahren zur kontinuierlichen Hochdruck-Verdichtung von zu verpressendem Gut, wird ein gleichmäßig hochverdichteter Pressstrang erzeugt, der anschließend in quaderförmige Ballen aufgeteilt wird. Die Ballen werden zur Aufrechterhaltung des Verdichtungsgrades durch Bänder, Drähte, Stricke oder Netze gesichert. Die hochverdichteten quaderförmigen Ballen sind besonders gut stapelbar und damit günstig transportier- und lagerbar. Durch den hohen Grad der Verdichtung lässt sich das Ladevolumen von Transportfahrzeugen und Lagerhallen optimal ausnutzen.

Durch das Vermeiden oszillierender Bewegungen und hoher Beschleunigungen im System, die beispielsweise bei Quaderballenpressen mit Kolbenverdichtungsprinzip auftreten, entfallen die hohen Massenkräfte. Durch die Zinkenwalzen als aktive Förderelemente wird die Reibung zwischen dem zu verpressenden Gut und den horizontalen Begrenzungsflächen des Presskanals reduziert und die Verdichtung kann mit relativ geringem Energieaufwand erfolgen. Die hohe gleichförmige Verdichtung des Pressgutes wird somit vorteilhaft mit einem sehr geringen Energieaufwand erreicht.

Aufgrund des Wirkprinzips und vieler gleichartig ausgebildeter Komponenten ist die Ballenpresse einfacher aufgebaut als im Stand der Technik bekannte Systeme. Mit dem erfindungsgemäßen Wirkprinzip wird eine im Vergleich zum Stand der Technik kostengünstigere Vorrichtung bei gleicher oder höherer Leistungsfähigkeit realisiert.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig.1:: Ballenpresse mit Gutaufnehmer, Vorverdichtungskammer und Presskanal in Schnittdarstellung,
- Fig. 2:: Ballenpresse aus Fig. 1 in Seitenansicht,
- Fig. 3:: Detailansicht der oberen Begrenzungsseite des Presskanals mit Zinkenwalzen in Seitenansicht,
- Fig.4:: Alternative Ausführungsform zur Ballenpresse aus Fig. 1 mit Gutaufnehmer, Vorverdichtungskammer und Presskanal in Schnittdarstellung,
- Fig. 5:: Ballenpresse aus Fig. 4 in Seitenansicht,
- Fig. 6:: Detaildarstellung korrespondierende Zinkensterne und
- Fig. 7:: Flankengestaltung der Zinkensterne.

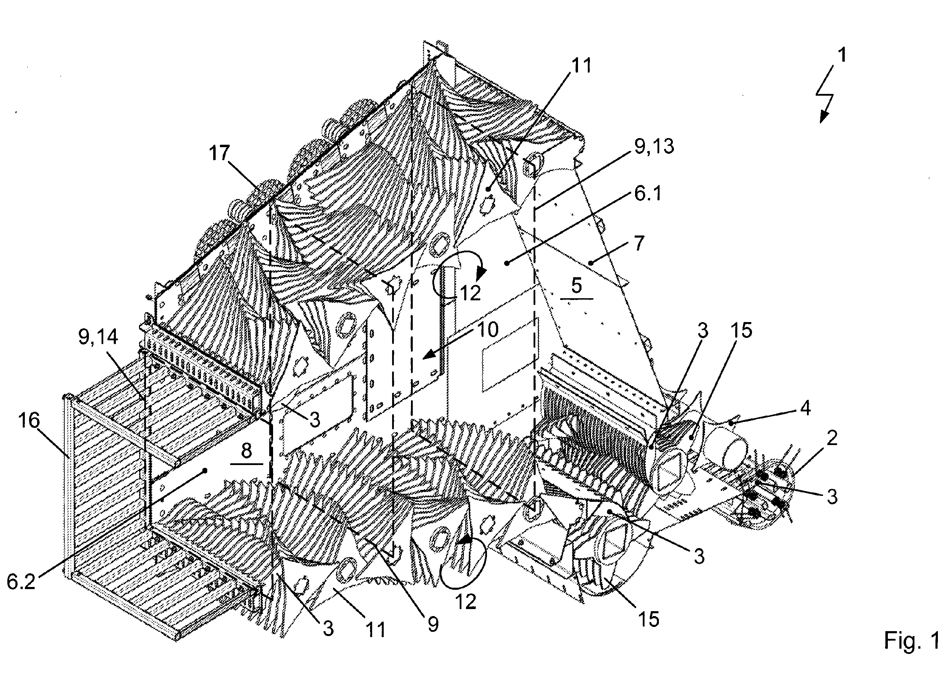

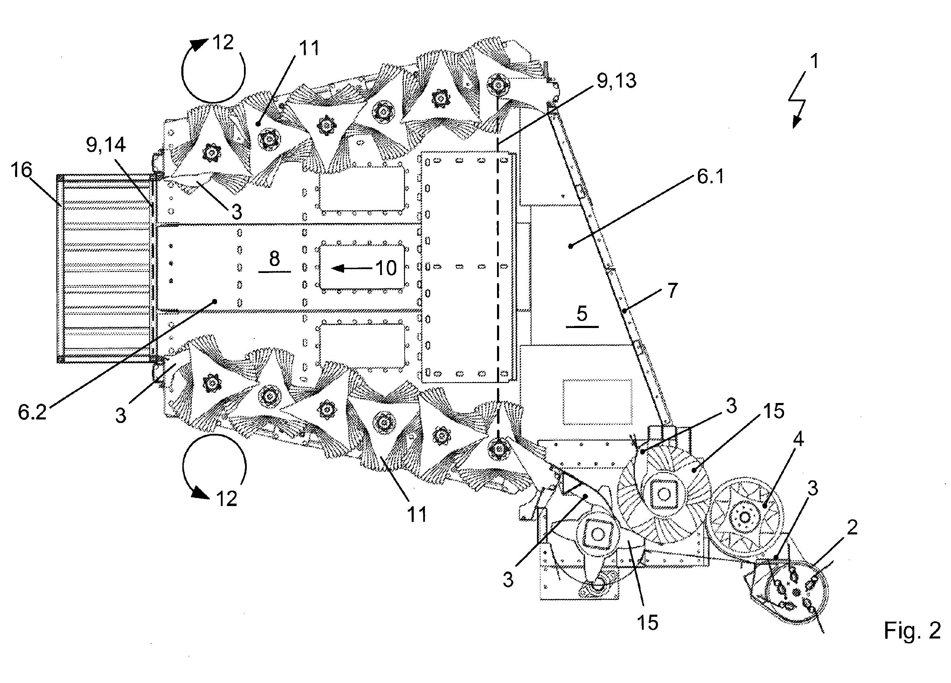

Fig. 1 zeigt eine erfindungsgemäße Ballenpresse 1, insbesondere zur Verdichtung von Biomasse als Pressgut, mit Gutaufnehmer 2, Vorverdichtungskammer 5 und Presskanal 8 in Schnittdarstellung, während in Fig. 2 die Ballenpresse 1 in Seitenansicht dargestellt ist. Mittels des Gutaufnehmers 2 wird das zuvor auf Schwad gelegte Pressgut, wie Stroh oder Heu, aufgenommen. Die aufgenommene Masse, in Form von Halmen, wird am Abstreifer 3 abgestreift und anschließend von der Transporteinrichtung 4 in Richtung der Pressvorrichtung gefördert. Dabei werden die Halme von Rotorelementen in Form von seitlich angeordneten Schneckenwendeln auf die Breite des sich im Wesentlichen in Fahrtrichtung der Erntemaschine erstreckenden Presskanals 8, die auch der Breite der Vorverdichtungskammer 5 entspricht, zusammengeführt und zur Vorverdichtungskammer 5 transportiert. Gegenläufig rotierende Förderelemente, im Weiteren auch als Transportwalzen 15 bezeichnet, fördern das Pressgut von unten in die Vorverdichtungskammer 5. Die Transportwalzen 15 weisen eine Vielzahl vierzinkiger gleichförmiger Zinkenscheiben auf, die parallel zueinander beabstandet angeordnet sind. Die Zinken sind jeweils paarweise gegenüberliegend ausgerichtet. Die Zinken der zwei gegenläufig rotierenden Transportwalzen 15 greifen ineinander, sodass die Vorverdichtungskammer 5 eine quasigeschlossene horizontale Unterseite als Einlassebene aufweist, die lediglich durch die Transportwalzen 15 mit zugehörigen Abstreifern 3 beziehungsweise deren ineinandergreifende Zinkenscheiben verschlossen wird. Die Bezeichnung quasigeschlossen bezieht sich an dieser Stelle und in den weiteren Ausführungen auf das Pressgut. Als quasigeschlossen werden demzufolge Begrenzungsseiten der Ballenpresse 1 zur Umgebung bezeichnet, die für das Pressgut nahezu dicht beziehungsweise undurchdringbar sind.
Eine der Transportwalzen 15 weist eine derartige Ausrichtung der Zinkenscheiben auf, dass die Zinken benachbarter Zinkenscheiben fluchtend angeordnet sind. Im Gegensatz dazu sind bei der anderen Transportwalze 15 die Zinkenscheiben derart zueinander ausgerichtet, dass die Zinken benachbarter Zinkenscheiben schraubenförmig versetzt angeordnet sind. Das von den Transportwalzen 15 in die Vorverdichtungskammer 5 geförderte Pressgut wird dort verdichtet. Die Vorverdichtung entspricht einer ersten Pressstufe.

Der Gutaufnehmer 2, die Transporteinrichtung 4 und die Transportwalzen 15 erfüllen gemeinsam mit den jeweiligen Abstreifern 3 die Funktionen Aufnehmen und Fördern des Pressgutes sowie Beschicken der Vorverdichtungskammer 5. In der Vorverdichtungskammer 5 wird das Pressgut, zum Beispiel Weizenstroh, von 6 kg/m³ auf 80 kg/m³ bis 120 kg/m³ verdichtet, wobei Fördermengen von 60 Tonnen oder mehr pro Stunde erreicht werden können.
Die Vorverdichtungskammer 5 wird durch die quasigeschlossene horizontale Unterseite, zwei gegenüberliegende, vertikal angeordnete Seitenwände 6.1 und eine Vorderwand 7 gegenüber der Umgebung abgegrenzt. Die Vorderwand 7 verbindet die beiden Seitenwände 6.1 an ihren zur vertikalen Richtung winklig ausgebildeten Schmalseite. Die der Vorderwand 7 gegenüberliegende Seite ist die zum Presskanal 8 hin offen gestaltete Auslassebene 13 der Vorverdichtungskammer 5. Die Auslassebene 13 stellt die Verbindung von Vorverdichtungskammer 5 und Presskanal 8 dar. Die Auslassebene 13 der Vorverdichtungskammer 5 und die Einlassebene 13 des Presskanals 8 stimmen überein. Die dargestellte Ausgestaltung der Erfindung besitzt zwischen Vorverdichtungskammer 5 und Presskanal 8 Türen, die im Anfahrvorgang der Ballenpresse nützlich sind. Dadurch kann der Gegendruck zur Vorverdichtung im Anfahrvorgang schnell aufgebaut werden.
An die Vorverdichtungskammer 5 schließt sich in Transportrichtung 10 der Presskanal 8 an, der aus zwei vertikalen, gegenüberliegend angeordneten, geschlossenen Seitenwänden 6.2 ausgebildet ist. Die zwei gegenüberliegenden horizontalen Begrenzungsseiten sind vorteilhaft durch Mittel zum Transport des Pressgutes in Form von Zinkenwalzen 11 ausgebildet, die den Presskanal 8 in vertikaler Richtung begrenzen. Die Zinkenwalzen 11 verbinden dabei die Seitenwände 6.2 des Presskanals 8 an ihren horizontalen Kanten, erstrecken sich demzufolge über die gesamte Breite des Presskanals 8 und sind beispielsweise nach dem Prinzip von Schaffußwalzen ausgebildet.
Unter Schaffußwalzen sind Walzkörper mit Mitteln zum Zerkleinern beziehungsweise Zerknicken von halmartigem Pressgut zu verstehen. Die drei Zinken der in ihrem Mittelpunkt auf einer gemeinsamen Welle parallel zueinander beabstandet angeordneten Zinkenscheiben der Zinkenwalzen 11 entfalten ihre erfindungsgemäße Wirkung derart, dass das Pressgut zusammengepresst sowie zerknickt wird und dabei ineinander verfilzt. Das Verhaken der Halme bewirkt einen zusätzlichen vorteilhaften Zusammenhalt des Pressgutes nach dem Verdichten.
Die Flanken der Zinken der Schaffußwalze weisen zur Förderung des Pressgutes in Transportrichtung 10 im Zusammenwirken untereinander und mit dem Abstreifer 3 an der Auslassebene 14 des Presskanals 8 bevorzugt eine kurvenförmige Kontur auf. Die Kontur der Flanken ist vorteilhaft doppel-S-förmig geschwungen ausgebildet. Dabei sind einer zwischen den Spitzen einer Zinkenscheibe kreisbogenförmigen konkaven Flankenkontur zwei zusätzliche konvexe bogenförmige Konturen überlagert.
Die Zinken der benachbarten Zinkenscheiben, die gemeinsam zur Zinkenwalze 11 zusammengefügt sind, sind dabei V-förmig versetzt beziehungsweise um die gemeinsame Welle durch ihren Mittelpunkt verdreht zueinander angeordnet. Besonders vorteilhaft bei dieser Ausgestaltung der Erfindung ist die beabstandete Halterung der Zinkenscheiben benachbart angeordneter Zinkenrotoren 11, die ineinander greifen und damit quasigeschlossene horizontale Begrenzungsseiten definieren.
Die vorteilhaft doppel-S-förmig geschwungene Flankenkontur ermöglicht das sichere Abstreifen des Pressgutes zwischen den Zinkenscheiben benachbart angeordneter Zinkenwalzen 11 und das Eingreifen der Zinken in das Pressgut. Das Eingreifen der Zinken in das Pressgut wird über einen möglichst spitzen Winkel an den Spitzen der Zinken realisiert, der wiederum aus der Ausbildung der kreisbogenförmigen konkaven Flankenkonturen, ausgehend von den Spitzen der Zinkenscheibe, resultiert. Durch die der kreisbogenförmigen konkaven Flankenkontur überlagerten konvexen bogenförmigen Konturen wird eine vollständige Überdeckung der Zinkenscheiben benachbart angeordneter rotierender Zinkenwalzen 11 in jeder Position gewährleistet. Die ineinander greifenden Zinken der Zinkenwalzen 11 und der Abstreifer 3 bilden eine geschlossene beziehungsweise quasigeschlossene Begrenzung für das zu verpressende Gut. Die obere und die untere Begrenzung, als horizontale Begrenzungsseiten des Presskanals 8, sind durch die rotierenden Zinkenwalzen 11 stetig, das heißt zu jedem Zeitpunkt, gegeben. Der Winkel zwischen den Flankenkonturen der ineinandergreifenden Zinkenscheiben benachbart angeordneter rotierender Zinkenwalzen 11 bewegt sich überwiegend im Bereich von 90° bis 110° und ist damit im Wesentlichen stumpf, was dem optimalen Abstreifen des Pressgutes dient.

Infolge langsamer Drehung der Zinkenwalzen 11 wird das Pressgut, beispielsweise landwirtschaftliches Erntegut, von der Einlassebene 13 des Presskanals 8 hin zur Auslassebene 14 des Presskanals 8 gefördert. Bei einer bevorzugten Rotationsgeschwindigkeit der Zinkenwalzen 11 von etwa vier Umdrehungen pro Minute beträgt der Vorschub des Erntegutes, beispielsweise Stroh, innerhalb des Presskanals 8 etwa 70 mm/s. Die Drehrichtungen 12 der Zinkenwalzen 11 einer Begrenzungsseite, die mit durchsatzabhängiger Drehzahl rotieren, sind gleich. Die die obere horizontale Begrenzungsseite bildenden Zinkenwalzen 11 drehen dabei im Uhrzeigersinn, während die die untere Begrenzungsseite bildenden Zinkenwalzen 11 entgegen dem Uhrzeigersinn rotieren. Die Drehrichtungen 12 der Zinkenwalzen 11 der gegenüberliegenden Begrenzungsseiten sind demzufolge gegensinnig.
Die Kräfte für den Transport des Pressgutes im Presskanal 8 werden folglich vorteilhaft über die gesamte Breite der horizontalen Begrenzungsseiten des Presskanals 8 und in Transportrichtung 10 gleichmäßig beabstandet auf das Erntegut übertragen.
Die Zinkenwalzen 11 werden mittels eines formschlüssigen Zugmitteltriebes, speziell eines Kettentriebes 17, angetrieben. Das Drehmoment wird dabei durch Räder mit einer entsprechenden formschlüssigen Profilierung, beispielsweise Zahnräder, von einer Antriebswelle auf die Zinkenwalzen 11 als Abtriebswellen übertragen. Antriebswelle und Abtriebswellen bewegen sich synchron zueinander. Der Antrieb der Wellen erfolgt über eine Kette.

Die gegenüberliegenden Zinkenwalzen 11 sind in Transportrichtung 10 des Pressgutes durch den Presskanal 8 derart angeordnet, dass sich die rechteckige Querschnittsfläche 9 des Presskanals 8 kontinuierlich verringert. Die durch die Zinkenwalzen 11 gebildeten horizontalen Begrenzungsseiten des Presskanals 8 sind zueinander geneigt ausgerichtet. Bei parallel angeordneten Seitenwänden 6.2 und zueinander geneigt angeordneten horizontalen Begrenzungsseiten, deren vertikaler Abstand sich in Transportrichtung 10 des Pressgutes kontinuierlich verringert, verringert sich erfindungsgemäß gleichermaßen die rechteckige Querschnittsfläche des Presskanals 8.
Beim Transport des Pressgutes durch den Presskanal 8 wird dieses nach der ersten Verdichtungsstufe in der Vorverdichtungskammer 5 in einer zweiten Pressstufe, der Hauptverdichtung, in dem sich verengenden Presskanal 8 in einem Verdichtungsverhältnis von 2:1 komprimiert. Bei einem beispielsweise ein Meter breiten Presskanal 8, das heißt einem Presskanal 8 mit vertikalen, parallel zueinander angeordneten und mit einem Meter beabstandeten Seitenwänden 6.2, wird die vertikale Ausdehnung des Presskanals 8 von der Einlassebene 13 zur Auslassebene 14 hin kontinuierlich von zwei Metern auf einen Meter verringert, sodass der Pressstrang am Austritt der Ballenpresse 1 einen Querschnitt von 1 m x 1 m aufweist.
Beim Durchlauf des Presskanals 8 wird das Pressgut derart verpresst, dass eine Entspannung ohne Sicherungsmittel lediglich in vertikaler Richtung erfolgt. Im Presskanal 8 wird vorverdichtetes halmförmiges Pressgut, zum Beispiel Stroh, auf 160 kg/m³ bis 240 kg/m³ verdichtet.
An der Auslassebene 14 des Presskanals 8 wird das hochverdichtete Pressgut über Abstreifer 3 durch den Auswurf 16 aus dem Presskanal 8 gefördert. Nach Verlassen der zweiten Pressstufe wird der Strang durch nicht dargestellte Mittel zum Abtrennen des Pressstranges in Ballen getrennt, in dem der quaderförmige Strang in regelmäßigen Abständen zerteilt wird. Die abgetrennten Quader werden dabei mit Hilfe von Mitteln zur Sicherung, zum Beispiel Netzen oder Fäden (ebenfalls nicht dargestellt), in ihrer Form als quaderförmige Ballen fixiert und können anschließend transportiert und/oder eingelagert werden.

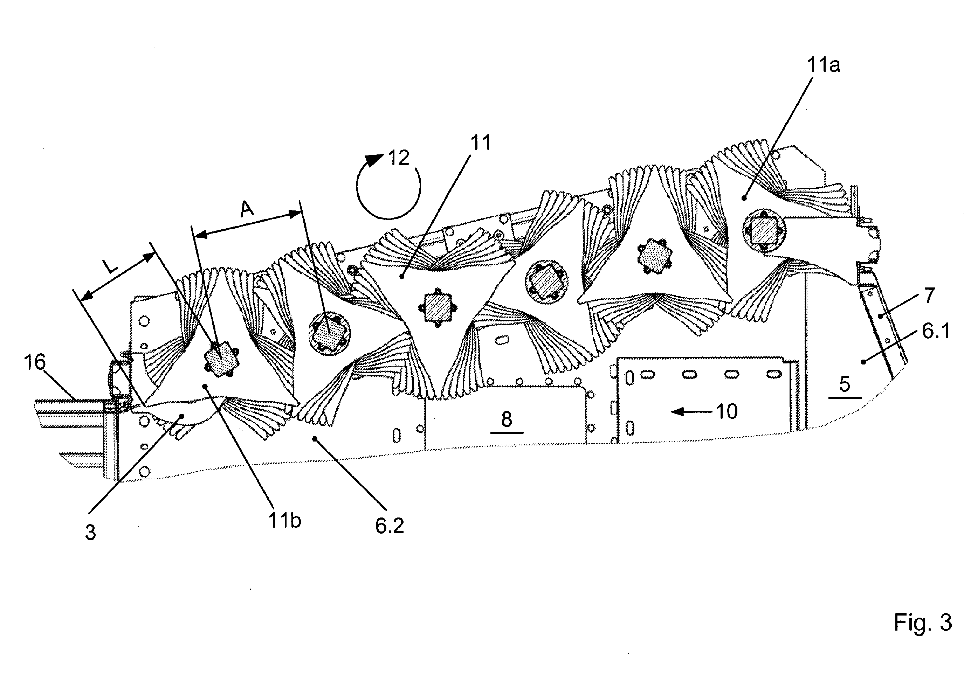

Fig. 3 zeigt die Detailansicht der oberen Begrenzungsseite des Presskanals 8 mit den Zinkenwalzen 11 in Seitenansicht. Die Zinkenwalzen 11 dienen zum einen dem Fördern des in der Vorverdichtungskammer 5 vorverdichteten Gutes in Transportrichtung 10 durch den Presskanal 8 und zum anderen dem Zerkleinern und/oder Zerknicken beispielsweise halmförmigen Pressgutes zum Verhaken und Verwirken der Halme untereinander. Die Zinkenwalzen 11 bewegen sich dabei gleichläufig im Uhrzeigersinn.
Die in Transportrichtung 10 erste Zinkenwalze 11a der oberen Begrenzungsseite des Presskanals 8 dient zur Aufnahme des vorverdichteten Pressgutes aus der Vorverdichtungskammer 5. Die Zinken der Zinkenwalze 11a, die jeweils entgegengesetzt zur Transportrichtung 10 ausgehend von der Welle ausgerichtet sind, bilden dabei auch den oberen Abschluss der Vorverdichtungskammer 5.
Die Zinkenwalzen 11 sind in der zur horizontalen Ebene zum Auswurf 16 hin geneigten Ebene zueinander im Abstand A angeordnet. Die Mittelbeziehungsweise Rotationsachsen der Zinkenwalzen 11 liegen dabei auf einer zur horizontalen Ebene geneigten Geraden. Benachbarte Zinkenwalzen 11 sind somit immer im gleichen Winkel zueinander angeordnet. Zudem sind die auf einer gemeinsamen Welle einer Zinkenwalze 11 hintereinander angeordneten Zinkenscheiben derart parallel zueinander beabstandet ausgerichtet, dass die Zinken benachbart angeordneter Zinkenwalzen 11 vorteilhaft ineinander greifen. Da die Abstände A der benachbarten Zinkenwalzen 11 nahezu einer Zinkenlänge L eines Zinkens entsprechen und die Zinken benachbart angeordneter Zinkenwalzen 11 ineinander greifen, wird durch die Gesamtanordnung von Zinkenwalzen 11 und Zinken eine quasigeschlossene Begrenzungsseite gebildet.
Die Anordnung der Zinkenwalzen 11 auf einer zur horizontalen Ebene geneigten Geraden, das heißt im gleichen Winkel zueinander, ermöglicht eine kontinuierlich voranschreitende Pressung des Pressgutes beim Durchqueren des Presskanals 8, was, bezogen auf die beim Pressvorgang auftretenden Presskräfte abhängig von Pressgut und Pressgeschwindigkeit, energetisch sehr günstig ist.
Nach einer nicht dargestellten alternativen Ausgestaltung sind die Zinkenwalzen 11 auf einer von einer Geraden abweichenden gekrümmten Linie zueinander angeordnet, sodass sich zueinander gekrümmte Ebenen der horizontalen Begrenzungsseiten ergeben. Dabei weist die gekrümmte Linie am Einlass in den Presskanal 8 eine Steigung auf, die in Transportrichtung 10 zum Auslass des Presskanals 8 abnimmt, sodass auch der große Verdichtungsgrad am Einlass in Transportrichtung 10 abnimmt.
Als weitere nicht dargestellte alternative Ausgestaltung ist eine der eine horizontale Begrenzungsseite bildenden Zinkenrotorreihen, vorzugsweise die untere, waagerecht ausgerichtet, wobei die die gegenüberliegende Begrenzungsseite bildende Zinkenrotorreihe dann entsprechend steiler geneigt beziehungsweise angestellt ist.
Außerdem ist zur Ausformung einer variablen Ballengröße durch Verschieben und/oder Schwenken der oberen und/oder der unteren Begrenzungsseite eine Variation der Ballenhöhe am Auslass des Presskanals 8 möglich.

Die Zinken einer jeden einzelnen Zinkenwalze 11 sind V-förmig um ihren Mittelpunkt verdreht zueinander ausgerichtet. Wie aus Fig. 3, einem vertikalen Schnitt parallel zur Seitenwand 6.2, ersichtlich, sind die ineinandergreifenden Zinken der dreieckigen Zinkenscheiben benachbart angeordneter Zinkenwalzen 11 ebenfalls zueinander verdreht ausgerichtet. Der Verdrehungswinkel beträgt dabei ungefähr 30°.

Die drei Zinken einer dreieckigen Zinkenscheibe sind sternförmig, stumpfwinklig zueinander ausgerichtet. Der Winkel zwischen jeweils zueinander benachbart angeordneten Zinken einer Zinkenscheibe beträgt mit 120° mehr als 90°. Die Flanken der Zinken der Zinkenscheiben, die sich jeweils auf der Außenseite, das heißt auf der Schmalseite, der Zinkenscheibe zwischen den Zinken erstrecken, sind doppel-S-förmig geschwungen, sodass das zu verpressende Gut, insbesondere halmförmiges Erntegut, über die benachbart angeordneten Zinken vorteilhaft transportierbar ist, ohne sich um die Zinken zu wickeln. Zudem werden die Halme des Pressgutes zusammengepresst sowie zerknickt und dabei ineinander verfilzt. Das Verhaken der Halme bewirkt einen zusätzlichen vorteilhaften Zusammenhalt des Pressgutes nach dem Verdichten.
Sowohl die Zinkengeometrie, das heißt zum einen die Anordnung der Zinken jeder Zinkenscheibe und zum anderen die Anordnung der Zinkenscheiben auf einer Welle, als auch die Konturen der Flanken jeder Zinke sind somit vorteilhaft für die Förderung und Verdichtung von landwirtschaftlichem Erntegut in einem Presskanal der erfindungsgemäßen Ballenpresse ausgebildet.
Das zum Auswurf 16 des Presskanals 8 geförderte Gut wird mit Hilfe eines rechen- beziehungsweise kammförmigen Abstreifers 3 von den Zinken der Zinkenwalze 11 b abgestreift und aus dem Presskanal 8 gedrückt. Die Zinken des Abstreifers 3 und die Zinken der Zinkenwalze 11 b greifen dabei in senkrechter Richtung zur Ebene der Schnittdarstellung abwechselnd ineinander.

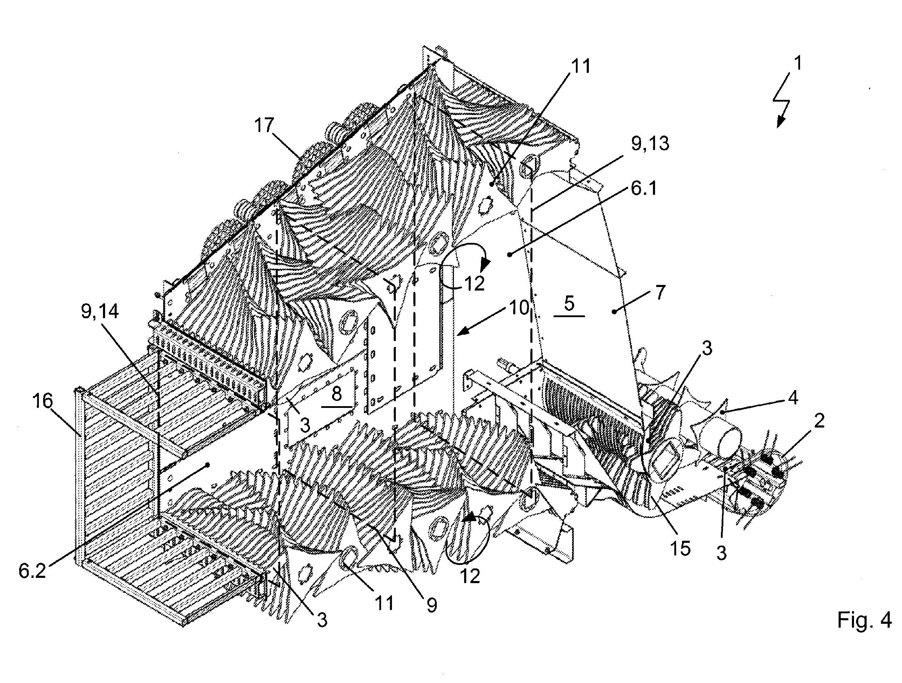

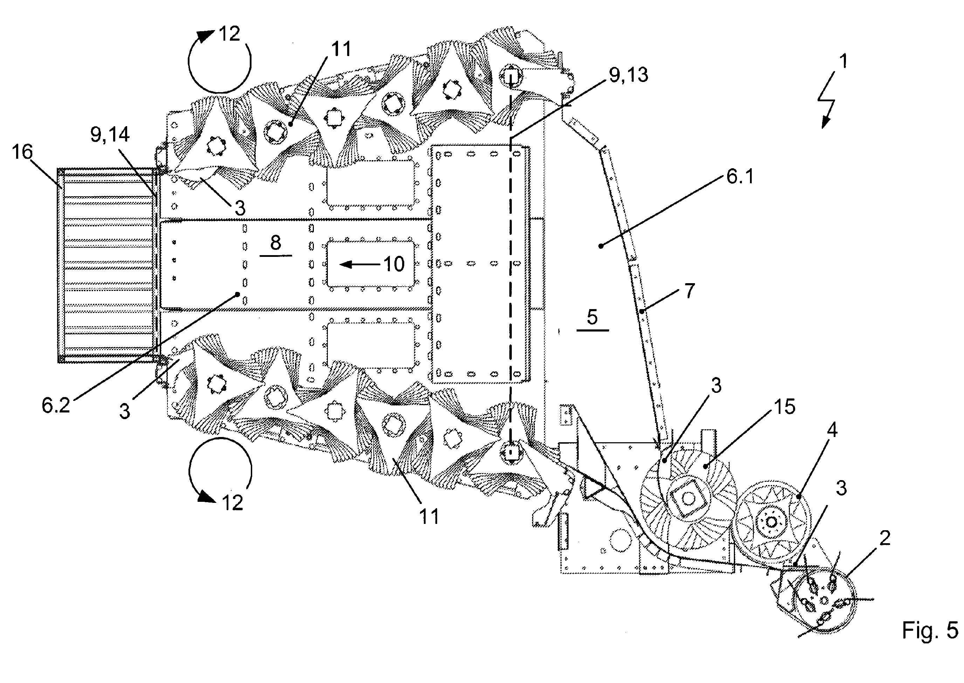

Fig. 4 zeigt eine alternative Ausgestaltung der Erfindung aus Fig. 1 mit Gutaufnehmer 2, Vorverdichtungskammer 5 und Presskanal 8 in Schnittdarstellung, während in Fig. 5 die Ballenpresse aus Fig. 4 in Seitenansicht dargestellt ist.
Der Unterschied zur Ausgestaltung nach den Fig. 1 und 2 besteht in der Anzahl und damit der Anordnung der gegenläufig rotierenden Förderelemente am Einlass zur Vorverdichtungskammer 5, den Transportwalzen 15, die das Pressgut von unten in die Vorverdichtungskammer 5 fördern. Bei der Ausgestaltung nach den Fig. 4 und 5 weist die Ballenpresse lediglich eine Transportwalze 15 mit einer Vielzahl vierzinkiger gleichförmiger Zinkenscheiben auf, die parallel zueinander beabstandet angeordnet sind. Die Zinken sind dabei jeweils paarweise gegenüberliegend und gleichzeitig paarweise schraubenförmig versetzt ausgerichtet.
Die Unterseite der Vorverdichtungskammer 5 wird durch die Zinken in Verbindung mit dem Abstreifer 3 beziehungsweise deren ineinandergreifende Zinken verschlossen.

Der Presskanal 8 wird durch eine Einlassebene 13, eine Auslassebene 14, zwei zueinander parallel angeordnete Seitenwände 6.2 sowie zueinander beabstandete obere und untere Begrenzungsseiten definiert. Der Abstand der oberen und unteren Begrenzungsseite verringert sich mit fortschreitender Bewegung des Pressgutes in Transportrichtung 10 und erreicht an der Auslassebene 14 seinen geringsten Wert. Das Pressgut wird beim Durchqueren des Presskanals 8 in vertikaler Richtung fortschreitend zusammengepresst und abhängig von der zurückgelegten Strecke mit stetig ansteigendem Verdichtungsgrad verdichtet.
Die obere und die untere Begrenzungsseite sind dabei bezüglich der horizontalen Ebene in Transportrichtung 10 nach unten beziehungsweise nach oben hin geneigt angeordnet und sind aus Mitteln zum Transport des Pressgutes ausgebildet. Als Mittel zum Transport dienen nebeneinander angeordnete Zinkenwalzen, die in ihrer Länge der Breite des Presskanals 8 entsprechen, über einen Kettentrieb 17 synchron angetrieben werden und jeweils im Uhrzeigersinn und gegen den Uhrzeigersinn kontinuierlich rotieren. Beim Durchlaufen der erfindungsgemäßen Ballenpresse 1 wird insbesondere halmartige Biomasse mit geringer Masse, großem Volumen und damit geringer Dichte aufgesammelt und lose in eine Vorverdichtungskammer 5 gefördert, dort als erste Verdichtungsstufe vorverdichtet und im Presskanal 8 als zweite Verdichtungsstufe in im Wesentlichen vertikaler Richtung bei ansteigendem Verdichtungsgrad hoch verdichtet.
Die Verfahrensschritte der Herstellung quaderförmiger Ballen aus hochverdichtetem Pressgut, zum Beispiel Stroh, mittels der erfindungsgemäßen Ballenpresse lassen sich folgendermaßen zusammenfassen:
- Aufnahme des halmförmigen Strohs mittels eines Gutaufnehmer 2 aus einem Strohschwad,
- Vorverdichten mit einem oder zwei Transportwalzen 15 innerhalb der Vorverdichtungskammer 5 von 6 kg/m³ auf 80 kg/m³ bis 120 kg/m³,
- Transportieren des vorverdichteten Strohs in einer zweiten Pressstufe mit sich langsam drehenden Rotoren in Form von Zinkenwalzen 11 beziehungsweise Schaffußwalzen, die mit durchsatzabhängiger Drehzahl rotieren und das Stroh in einem sich verengenden Presskanal 8 und einem Verdichtungsverhältnis von 3:1 verdichten,
- Trennen des Pressstranges mittels einer Trennvorrichtung in regelmäßigen Abständen zu quaderförmigen Ballen mit gleichen Abmessungen und
- Fixierung der Ballen mittels einer Bindevorrichtung zur Aufrechterhaltung ihres Verdichtungsgrades.

Das erfindungsgemäße Verfahren zur kontinuierlichen Hochdruck-Verdichtung von zu verpressendem Gut zu quaderförmigen Ballen ist als kontinuierliches Pressverfahren mit dem bekannten Strangpressverfahren vergleichbar.
Die gleichmäßig hochverdichteten quaderförmigen Ballen sind vorteilhaft gut stapelbar und damit günstig und platzsparend transportier- und einlagerbar.

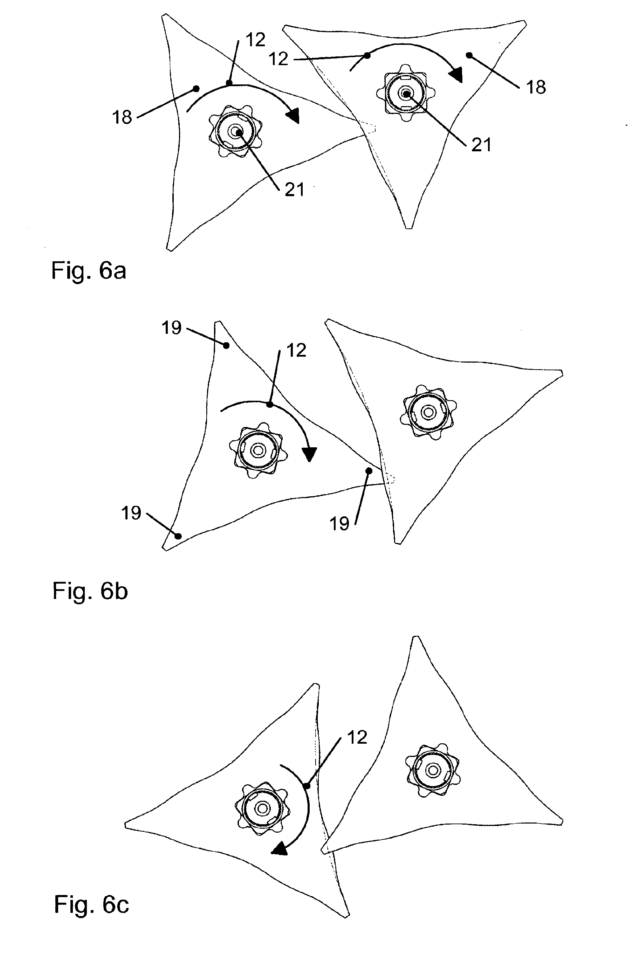

In Figur 6 ist der Bewegungsablauf von korrenspondierenden Zinkensternen 18 in drei Phasen gemäß Figur 6a, 6b und 6c dargestellt. Die Zinkensterne 18 sitzen auf der Welle 21 der Zinkenrotoren 11 und benachbarte Wellen drehen in gleichsinniger Drehrichtung 12. Die Zinken 19 der Zinkensterne 18 greifen in das Pressgut ein und transportieren und verdichten dieses.

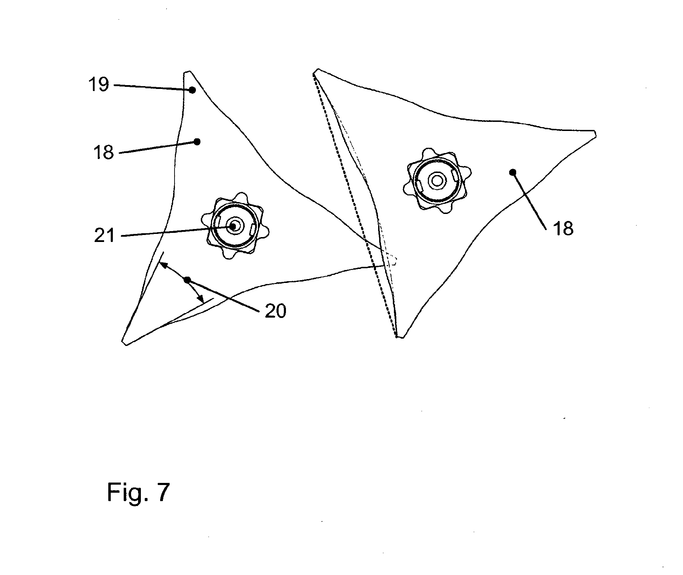

Figur 7 zeigt die Flankengestaltung der Zinkensterne 18. Dazu ist die Kontur der Flanke zwischen zwei Zinken 19 eines Zinkensterns 18 vergrößert dargestellt.
Die spezielle Flankenform der Zinkensterne 18 resultiert aus dem Bestreben, die Spitzen der Zinken 19 so schlank als möglich auszuführen, um beim Eintauchen der Zinken 19 in den Presskanal leicht und tief in das Pressgut einzudringen.
Ausgehend von einem gleichseitigen Dreieck, dessen Kontur punktiert dargestellt ist, kann man die Kontur zwischen den Zinkenspitzen durch einen konkaven Bogen, z.B. einen strichpunktiert dargestellten Kreisbogen verbinden. Dieser konkave Bogen ermöglicht einen spitzen Zinkenwinkel 20 der kleiner oder maximal gleich 60° ist. Im angegebenen Beispiel ist der Zinkenwinkel mit 36° ausgeführt. Dies erfolgt, ohne die ständig vollständige Überdeckung des benachbarten Zinkensterns 18 aufzuheben.
Die gewollte Mindestüberdeckung der Zinkenspitze mit der aktiven vorderen Flankenkontur ist jedoch bei einer ausschließlich konkaven Flankenkontur gemäß der strichpunktierten Linie nicht in jedem Fall gegeben. Deswegen ist im kritischen Bereich der Flankenkontur ein konvexer Bogen eingeführt, der die Mindestüberdeckung auch in diesem Bereich garantiert. Der Übergang zwischen konkaver zu konvexer Flankenkontur ist stetig, also ebenfalls bogenförmig, bevorzugt ein Kreisbogen.
Diese konvexe Flankenkontur ist auf der konkaven Flankenkontur zweimal vorhanden, wodurch eine sogenannte Doppel-S-Form entsteht. Dadurch ist gewährleistet, dass die Zinkenspitze auch beim Austauchen aus dem Presskanal die gewollte Mindestüberdeckung mit der inaktiven rückwärtigen Flankenkontur des benachbarten Zinkensterns 18 aufweist.
Die vordere Flankenkontur hat im Gegensatz zur rückwärtigen eine aktive, in Presskanalausgang gerichtete Wirkung auf das Pressgut.

### LISTE DER BEZUGSZEICHEN

- 1: Ballenpresse
- 2: Gutaufnehmer
- 3: Abstreifer
- 4: Transporteinrichtung
- 5: Vorverdichtungskammer
- 6.1, 6.2: Seitenwand
- 7: Vorderwand
- 8: Presskanal
- 9: Querschnittsfläche
- 10: Transportrichtung
- 11, 11a, 11b: Zinkenwalze, Zinkenrotor
- 12: Drehrichtung
- 13: Einlassebene des Presskanals,
Auslassebene der Vorverdichtungskammer
- 14: Auslassebene des Presskanals
- 15: Transportwalze
- 16: Auswurf Presskanal
- 17: Kettentrieb
- 18: Zinkenstern, Zinkenscheibe
- 19: Zinken
- 20: Zinkenwinkel
- 21: Welle der Zinkenrotoren
- A: Abstand
- L: Zinkenlänge

## Patentansprüche

1. Ballenpresse (1) zur kontinuierlichen Hochdruck-Verdichtung von zu verpressendem Gut zu quaderförmigen Ballen, insbesondere von landwirtschaftlichem Erntegut oder Wertstoffen der verarbeitenden Recyclingindustrie, aufweisend
- einen Gutaufnehmer (2),
- einen Presskanal (8), der gebildet ist aus vertikalen Seitenwänden (6.2) und einer oberen und einer unteren in Transportrichtung (10) des Pressgutes zueinander geneigten horizontalen Begrenzung aus Mitteln zum Transport und zum Verdichten des Pressgutes,
- Mittel zum Abtrennen der Ballen vom Pressstrang und
- Mittel zum Sichern des verdichteten Pressgutes,
- wobei zwischen dem Gutaufnehmer (2) und dem Presskanal (8) eine zum Presskanal (8) hin offene Vorverdichtungskammer (5) mit vertikal angeordneten Seitenwänden (6.1) sowie einer Vorderwand (7) ausgebildet ist und
- **dadurch gekennzeichnet, dass** die Mittel zum Transport und zum Verdichten des Pressgutes als mehrere jeweils eine horizontale Begrenzung des Presskanals (8) bildende rotierende Zinkenwalzen (11) ausgestaltet sind, die quer zur Transportrichtung (10) angeordnet sind.

2. Ballenpresse (1) nach Anspruch 1, **dadurch gekennzeichnet, dass** die Zinkenwalzen (11)
- als langsam drehende Rotoren ausgebildet sind, die mit durchsatzabhängiger Drehzahl rotieren, wobei die Drehrichtungen (12) der Zinkenwalzen (11) einer Begrenzungsseite jeweils gleich sind und die Drehrichtungen (12) der Zinkenwalzen (11) gegenüberliegender Begrenzungsseiten gegensinnig sind,
- sich über die gesamte Breite der horizontalen Begrenzung des Presskanals (8) erstrecken und
- aus einer Vielzahl dreizinkig, in ihrem Mittelpunkt auf einer gemeinsamen Welle parallel zueinander beabstandet, V-förmig versetzt angeordneter Zinkenscheiben derart ausgebildet sind, dass die Zinken benachbart in einer Ebene angeordneter Zinkenwalzen (11) ineinander greifen.

3. Ballenpresse (1) nach Anspruch 1 oder 2, **dadurch gekennzeichnet, dass**
- die drei Zinken der Zinkenscheiben stumpfwinklig zueinander und gleichmäßig am Umfang verteilt angeordnet sind und
- die Flanken der Zinken der Zinkenwalzen (11) doppel-S-förmig geschwungen ausgebildet sind.

4. Ballenpresse (1) nach einem der Ansprüche 1 bis 3, **dadurch gekennzeichnet, dass** die Zinken mit einem Winkel von 25° bis 45° ausgebildet sind.

5. Ballenpresse (1) nach einem der Ansprüche 1 bis 3, **dadurch gekennzeichnet, dass** die vertikalen Seitenwände (6.2) des Presskanals (8) derart zueinander geneigt ausgerichtet sind, dass sich der Abstand zwischen den Seitenwänden (6.2) als Begrenzungsseiten des Presskanals (8) in Transportrichtung (10) des zu verpressenden Gutes kontinuierlich verringert.

6. Ballenpresse (1) nach einem der Ansprüche 1 bis 5, **dadurch gekennzeichnet, dass** die vertikalen Seitenwände (6.1) der Vorverdichtungskammer (5) derart zueinander geneigt ausgerichtet sind, dass sich der Abstand zwischen den Seitenwänden (6.1) in Transportrichtung des zu verpressenden Gutes kontinuierlich verringert.

7. Verfahren zur kontinuierlichen Hochdruck-Verdichtung von zu verpressendem Gut, insbesondere von landwirtschaftlichem Erntegut oder Wertstoffen der verarbeitenden Recyclingindustrie, zu quaderförmigen Ballen, mittels einer Ballenpresse (1) nach einem der vorangegangenen Ansprüche, folgende Schritte umfassend:
- Aufnehmen des Gutes mittels eines Gutaufnehmers (2),
- Vorverdichten des Gutes in der Vorverdichtungskammer (5),
- Hauptverdichten des vorverdichteten Pressstranges
- durch Bewegung des Gutes in einem Presskanal (8) mittels sich langsam drehender Zinkenwalzen (11), wobei sich die Querschnittsfläche (9) des Presskanals (8) in Transportrichtung (10) kontinuierlich verringert und
- durch temporäres Eingreifen der Zinken der Zinkenwalzen (11) in den Pressstrang durch die drehende Bewegung der Zinkenwalzen und
- Konfektionieren des Pressstranges zu Ballen.

8. Verfahren nach Anspruch 7, **dadurch gekennzeichnet, dass** die Kräfte für den Transport des Gutes durch den Presskanal (8) über die gesamte Breite der horizontalen Begrenzungsseiten und in Transportrichtung (10) gleichmäßig beabstandet mittels der Zinkenwalzen (11) auf das zu verpressende Gut übertragen werden.

9. Verfahren nach Anspruch 7 oder 8, **dadurch gekennzeichnet, dass** das Pressgut in der Vorverdichtungskammer (5) auf eine Dichte von 80 kg/m³ bis 120 kg/m³ und im Presskanal (8) auf eine Dichte von 160 kg/m³ bis 240 kg/m³ verdichtet wird.

10. Verfahren nach einem der Ansprüche 7 bis 9, **dadurch gekennzeichnet, dass** das Pressgut beim Transport durch den Presskanal (8) mit einem gleichmäßigen Verdichtungsgrad und einem Verdichtungsverhältnis von bis zu 3:1 verdichtet wird.

## Claims

1. Baler (1) for continuous high-pressure compaction of material to be compressed to form rectangular bales, especially from agricultural crops or reusable material from the processing recycling industry, comprising:
- a material pick-up unit (2),
- a compression channel (8) which is composed of vertical side walls (6.2) and an upper and a lower horizontal boundary consisting of means for conveying and compacting the material to be compressed, said means being inclined in relation to each other in the conveying direction (10) of the material to be compressed,
- means for separating the bales from the compressed strand, and
- means for securing the material to be compressed,
wherein a pre-compression chamber (5) consisting of vertically disposed side walls (6.1) and a front wall (7) is formed between the material pick-up unit (2) and the compression channel (8) and is designed to be open towards the compression channel (8),
**characterized in that**
- the means for conveying and compacting the material to be compressed are designed as a plurality of rotating tine rolls (11) which each form a horizontal boundary of the compression channel (8) and which are arranged transversely to the conveying direction (10).

2. Baler (1) according to claim 1, **characterized in that** the tine rolls (11)
- are designed as low-speed rotors which rotate at throughput-dependent rotational speed, wherein the directions of rotation (12) of the tine rolls (11) of one boundary side are the same and the directions of rotation (12) of the tine rolls (11) of opposite boundary sides are counter to each other,
- extend over the entire width of the horizontal boundary of the compression channel (8) and
- are formed of a plurality of three-tined tine plates, which in their center are spaced apart from each other in parallel on a common shaft and which are arranged so as to be staggered in a V-shape in such a manner that the tines of the tine rolls (11) which are arranged adjacently in one plane mesh with each other.

3. Baler (1) according to claim 1 or 2, **characterized in that**
- the three tines of the tine plates are disposed at an obtuse angle with respect to each other and are arranged so as to be evenly distributed over the periphery and
- the edges of the tines of the tine rolls (11) feature a double-curved S-shaped configuration.

4. Baler (1) according to any of claims 1 to 3, **characterized in that** the tines are designed with an angle of 25° to 45°.

5. Baler (1) according to any of claims 1 to 3, **characterized in that** the vertical side walls (6.2) of the compression channel (8) are aligned at an angle with respect to each other such that the distance between the side walls (6.2) as the boundary sides of the compression channel (8) is continuously reduced in the conveying direction (10) of the material to be compressed.

6. Baler (1) according to any of claims 1 to 5, **characterized in that** the vertical side walls (6.1) of the pre-compression chamber (5) are aligned at an angle with respect to each other such that the distance between the side walls (6.1) is continuously reduced in the conveying direction (10) of the material to be compressed.

7. Method for continuous high-pressure compaction of material to be compressed, especially from agricultural crops or reusable material from the processing recycling industry, to form rectangular bales by means of a baler (1) according to any of the preceding claims, comprising the following steps:
- picking up the material by means of a material pick-up unit (2)
- pre-compression of the material in the pre-compression chamber (5)
- main compression of the pre-compressed compressed strand
- by moving the material in a compression channel (8) by means of low-speed tine rolls (11), wherein the cross-sectional area (9) of the compression channel (8) is continuously reduced in the conveying direction (10) and
- by temporarily engaging the tines of the tine rolls (11) in the compressed strand through the rotating movement of the tine rolls and
- assembling of the compressed stand into bales.

8. Method according to claim 7, **characterized in that** the forces for conveying the material through the compression channel (8) over the entire width of the horizontal boundary sides and in the conveying direction (10) are transmitted in an evenly spaced apart fashion to the material to be compressed by means of the tine rolls (11).

9. Method according to claim 7 or 9, **characterized in that** the material to be compressed in the pre-compression chamber (5) is compressed to a density of 80 kg/m³ to 120 kg/m³ and in the compression channel (8) is compressed to a density of 160 kg/m³ to 240 kg/m³.

10. Method according to any of claims 7 to 9, **characterized in that** the material to be compressed is compressed with a uniform degree of compression and a compression ratio of up to 3:1 when being conveyed through the compression channel (8).

## Revendications

1. Presse à balles (1) permettant le compactage à haute pression en continu de matières à compresser sous la forme de balles rectangulaires, en particulier de matières agricoles récoltées ou de matières récupérables de l'industrie de traitement de recyclage, comprenant
- un ramasseur (2),
- une voie de compression (8) étant composée de parois latérales verticales (6.2) ainsi que d'une délimitation supérieure et d'une délimitation inférieure horizontales formées par des moyens destinés au transport et au compactage des matières à compresser, lesdits moyens étant inclinés l'un par rapport à l'autre dans la direction de transport (10) des matières à compresser,
- des moyens pour séparer les balles du boudin compressé et
- des moyens pour fixer les matières à compresser,
dans lequel une chambre de précompression (5) étant constituée de parois latérales (6.1) disposées verticalement ainsi que d'une paroi avant (7) est disposée entre le ramasseur (2) et la voie de compression (8) et présente une configuration ouverte vers la voie de compression (8),
**caractérisée en ce que**
- les moyens destinés au transport et au compactage des matières à compresser sont conçus sous la forme d'une pluralité de rouleaux à dents (11) rotatifs formant chacun une délimitation horizontale de la voie de compression (8) et s'étendant transversalement par rapport à la direction de transport (10).

2. Presse à balles (1) selon la revendication 1, **caractérisée en ce que** les rouleaux à dents (11)
- sont conçus en tant que rotors à basse vitesse tournant avec une vitesse de rotation en dépendance du débit, dans laquelle les directions de rotation (12) des rouleaux à dents (12) d'un côté de délimitation sont les mêmes et les directions de rotation (12) des rouleaux à dents (11) de côtés de délimitation faisant face l'un à l'autre sont opposées l'une à l'autre,
- s'étendent sur toute la largeur de la délimitation horizontale de la voie de compression (8) et
- sont formés d'une pluralité de plaques à dents comprenant chacune trois dents, lesdites plaques dans leur centre étant espacées l'une de l'autre sur un arbre commun en parallèle et étant disposées d'une manière échelonnée en forme d'un V telle que les dents des rouleaux à dents (11) disposées adjacentes dans un plan viennent s'engrener l'une avec l'autre.

3. Presse à balles (1) selon la revendication 1 ou 2,
**caractérisée en ce que**
- les trois dents des plaques à dents sont disposées selon un angle obtus l'une par rapport à l'autre et sont agencées d'une manière uniformément répartie le long de la périphérie et
- les bords des dents des rouleaux à dents (11) présentent une configuration à double courbe en forme d'un S.

4. Presse à balles (1) selon l'une quelconque des revendications 1 à 3, **caractérisée en ce que** les dents sont conçues avec un angle de 25° à 45°.

5. Presse à balles (1) selon l'une quelconque des revendications 1 à 3, **caractérisée en ce que** les parois latérales verticales (6.2) de la voie de compression (8) sont orientées selon un angle l'une par rapport à l'autre de telle manière que la distance entre les parois latérales (6.2) et les côtés de délimitation de la voie de compression (8) soit graduellement réduite dans la direction de transport (10) des matières à compresser.

6. Presse à balles (1) selon l'une quelconque des revendications 1 à 5, **caractérisée en ce que** les parois latérales verticales (6.1) de la chambre de précompression (5) sont orientées selon un angle l'une par rapport à l'autre de telle manière que la distance entre les parois latérales (6.1) soit graduellement réduite dans la direction de transport (10) des matières à compresser.

7. Procédé permettant le compactage à haute pression en continu de matières à compresser, en particulier de matières agricoles récoltées ou de matières récupérables de l'industrie de traitement de recyclage sous la forme de balles rectangulaires au moyen d'une presse à balles (1) selon l'une quelconque des revendications précédentes, comprenant les étapes suivantes:
- ramasser les matières au moyen d'un ramasseur (2),
- précompresser les matières dans la chambre de précompression (5)
- compression principale du boudin précompressé
- en déplaçant les matières dans une voie de compression (8) au moyen de rouleaux à dents (11) à basse vitesse, dans lequel la section transversale (9) est graduellement réduite dans la direction de transport (10) et
- en faisant engrener temporairement les dents des rouleaux à dents (11) dans le boudin compressé par le mouvement rotatif des rouleaux à dents et
- l'assemblage du boudin compressé en balles.

8. Procédé selon la revendication 7,
**caractérisé en ce que** les forces destinées pour le transport des matières dans la voie de compression (8) sur toute la largeur des côtés de délimitation horizontales et dans la direction de transport (10) sont transmises aux matières à compresser au moyen des rouleaux à dents (11) d'une façon uniformément espacée.

9. Procédé selon la revendication 7 ou 9,
**caractérisé en ce que** les matières à compresser dans la chambre de précompression (5) sont compressées à une densité de 80 kg/m³ à 120 kg/m³ et dans la voie de compression (8) sont compressées à une densité de 160 kg/m³ à 240 kg/m³.

10. Procédé selon l'une quelconque des revendications 7 à 9,
**caractérisé en ce que** les matières à compresser sont compressées avec un degré de compression uniforme et avec un taux de compression allant jusqu'à 3:1 lors de leur passage dans la voie de compression (8).
